(19) Europäisches Patentamt
European Patent Office
Office européen des brevets

(11) **EP 3 581 692 B1**

(12) **EUROPEAN PATENT SPECIFICATION**

(45) Date of publication and mention of the grant of the patent:
**23.03.2022 Bulletin 2022/12**

(21) Application number: **17844634.0**

(22) Date of filing: **19.09.2017**

(51) International Patent Classification (IPC):
**D04H 1/4374** (2012.01)     **D04H 1/4266** (2012.01)
**D04H 1/552** (2012.01)     **D04H 1/728** (2012.01)
**D04H 1/74** (2006.01)

(52) Cooperative Patent Classification (CPC):
**D04H 1/4266; B32B 5/12; D04H 1/4374;
D04H 1/552; D04H 1/728; D04H 1/74**

(86) International application number:
**PCT/JP2017/033694**

(87) International publication number:
**WO 2018/146851 (16.08.2018 Gazette 2018/33)**

(54) **FIBER ORIENTATION MATERIAL AND METHOD FOR MANUFACTURING SAME**

FASERAUSRICHTUNGSMATERIAL UND VERFAHREN ZUR HERSTELLUNG DAVON

MATÉRIAU D'ORIENTATION DE FIBRE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.02.2017 JP 2017020421**

(43) Date of publication of application:
**18.12.2019 Bulletin 2019/51**

(73) Proprietor: **Kabushiki Kaisha Toshiba
Minato-ku
Tokyo 105-8001 (JP)**

(72) Inventors:
• **TOKUNO, Yoko
Tokyo 105-8001 (JP)**
• **UEMATSU, Ikuo
Tokyo 105-8001 (JP)**

(74) Representative: **Moreland, David
Marks & Clerk LLP
Aurora
120 Bothwell Street
Glasgow G2 7JS (GB)**

(56) References cited:
**WO-A1-2006/061862      JP-A- 2008 536 539
JP-A- 2011 094 281      JP-A- 2014 523 492**

• **DATABASE WPI Week 201242 Thomson
Scientific, London, GB; AN 2011-Q11283
XP002799916, & KR 2011 0129111 A (KOLON
FASHION MATERIAL INC) 1 December 2011
(2011-12-01)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[Technical Field]

An embodiment of the invention relates to a fiber-oriented material and a method for manufacturing the fiber-oriented material.

[Background Art]

There is a deposited body that is made by forming a fine fiber by electrospinning (also called electric field spinning, charge-induced spinning, etc.) and by depositing the fiber that is formed.
For a deposited body that is formed using electrospinning, the fibers are deposited randomly; therefore, the tensile strength is low in all directions; and the fluctuation of the tensile strength is large. In such a case, the direction in which the fibers of the deposited body extend can be aligned by mechanically pulling the fibers in one direction when depositing the fibers. If the direction in which the fibers extend can be aligned, the tensile strength of the deposited body can be increased in the direction in which the fibers extend. However, by merely pulling the fibers mechanically in one direction when depositing the fibers, only the tensile strength in that direction can be increased.
Therefore, it has been desirable to develop a fiber-oriented material and a method for manufacturing the fiber-oriented material in which the tensile strength can be increased in multiple directions.

[Prior Art Documents]

[Patent Literature]

[PTL 1] JP-A 2013-139655 (Kokai)
WO 2013/000442 relates to a method of production of two-dimensional or three-dimensional fibrous materials of fibers, in which at first the fiber is continuously drawn out of a solution and is pulled to a rotary set of n electrodes by means of electrostatic field. The individual electrodes of the set are arranged at regular spacing to each other and at the same distance from the set of electrodes rotation axis and parallel with it. The fiber is wound on the rotating set of the electrodes. After a layer of the fibers, was formed, the electrostatic field is disconnected and rotation of the set of the electrodes is stopped, and the layer of the fibers formed in a field between two adjacent electrodes is removed. In a subsequent step the rotating set of the electrodes turn through an angle of 360/n°, and the layer of the fibers formed between two adjacent electrodes in the field adjacent to the field, from which the layer was removed in preceding step, is removed.

[Summary of Invention]

[Problem to be Solved by the Invention]

A problem to be solved by the invention is to provide a fiber-oriented material and a method for manufacturing the fiber-oriented material in which the tensile strength can be increased in multiple directions.

[Means for Solving the Problem]

In a first aspect, a fiber-oriented material is provided as recited in claim 1.
In a second aspect, a method of manufacturing a fiber-oriented material is provided as recited in claim 8.

[Brief Description of Drawings]

FIGS. 1A and 1B are schematic views for illustrating a fiber-oriented material.
FIGS. 2A to 2C are schematic graphs for illustrating distributions of the tensile strength.
FIG. 3 is a schematic view for illustrating an electrospinning apparatus.
FIGS. 4A and 4B are electron micrographs of deposited bodies.
FIG. 5 is a schematic view for illustrating cutting out deposited body sheets.
FIG. 6 is a schematic view for illustrating a close-adhesion process.
FIGS. 7A and 7B are schematic views for illustrating the close-adhesion process.

FIGS. 8A to 8C are schematic views for illustrating the close-adhesion process.

FIG. 9 is an electron micrograph of the surface of a deposited body sheet.

FIGS. 10A and 10B are electron micrographs of the surface of a fiber-oriented material.

FIGS. 11A and 11B are photomicrographs of the surface of a fiber-oriented material.

FIG. 12 is a schematic view for illustrating the orientation of collagen molecules of fibers.

FIGS. 13A to 13D are atomic force micrographs of the surface of fibers.

FIG. 14 is a schematic view for illustrating test pieces C, D, and E used in a tensile test.

FIGS. 15A and 15B are photographs for illustrating states of the tensile test.

FIGS. 16A and 16B are photomicrographs of the test pieces C and D.

FIG. 17 is a graph for illustrating the result of the tensile test of a deposited body 7.

FIG. 18 is a graph for comparing the result of the tensile tests of deposited bodies, fiber-oriented sheets, and fiber-oriented materials.

[Modes for Carrying Out the Invention]

Embodiments will now be illustrated with reference to the drawings. Similar components in the drawings are marked with the same reference numerals; and a detailed description is omitted as appropriate.

(Fiber-oriented material)

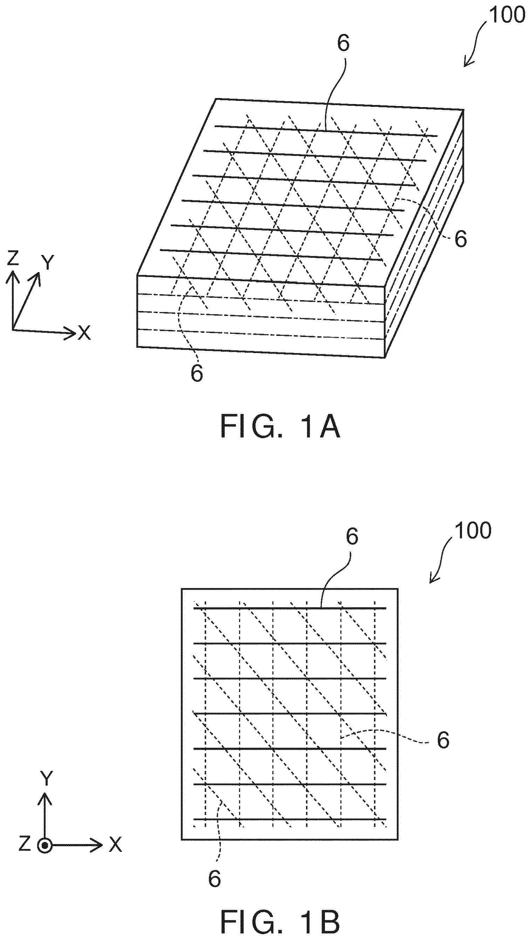

FIGS. 1A and 1B are schematic views for illustrating a fiber-oriented material 100.

FIG. 1A is a schematic perspective view of the fiber-oriented material 100; and FIG. 1B is a drawing of the fiber-oriented material 100 of FIG. 1A when viewed from a Z-direction.

Arrows X, Y, and Z in the drawings illustrate three directions orthogonal to each other. For example, the thickness direction of the fiber-oriented material 100 (a direction perpendicular to a major surface of the fiber-oriented material 100) is taken as the Z-direction. Also, one direction perpendicular to the thickness direction is taken as a Y-direction; and a direction perpendicular to the Z-direction and the Y-direction is taken as an X-direction.

The fiber-oriented material 100 includes a fiber 6. The fiber 6 is formed using electrospinning.

The fiber 6 includes a polymeric substance. The polymeric substance can be, for example, an industrial material, a bio-affinity material, etc. The industrial material can be, for example, polypropylene, polyethylene, polystyrene, polyethylene terephthalate, polyvinyl chloride, polycarbonate, nylon, aramid, polyacrylate, polymethacrylate, polyimide, polyamide-imide, polyvinylidene fluoride, polyethersulfone, etc. The bio-affinity material can be, for example, collagen, laminin, gelatin, polyacrylonitrile, chitin, polyglycolic acid, polylactic acid, etc. However, the polymeric substance is not limited to those illustrated.

Also, the fibers 6 are closely adhered to each other. According to the solvent used in a "close-adhesion process" described below, there are cases where one portion of the fibers 6 melts; and the fibers 6 are fused to each other at the melted portions. Therefore, in the specification, the state in which the fibers 6 are closely adhered to each other and the state in which the fibers 6 are closely adhered and a portion of the fibers 6 is further fused are called the "closely-adhered state."

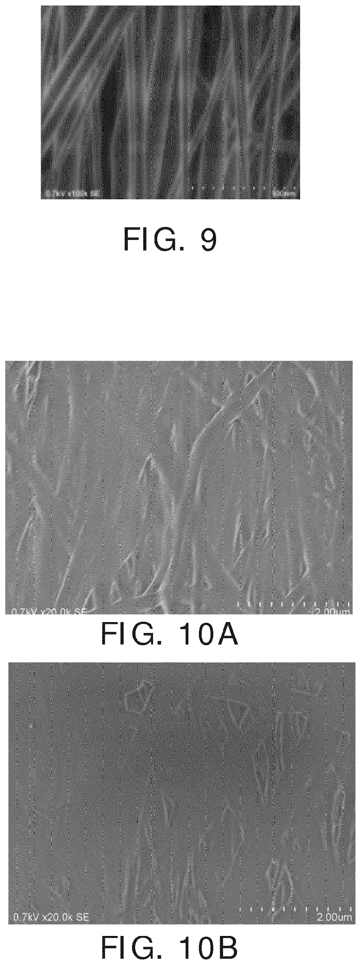

It is difficult to measure the diametrical dimension of the fiber 6 in the fiber-oriented material 100 because the fibers 6 included in the fiber-oriented material 100 are in the closely-adhered state (referring to FIGS. 10A and 10B).

However, it can be proved that fibers 6 exist in the closely-adhered state from the anisotropy of the tensile strength, the direction in which the long axes of the molecules extend, etc., described below.

Also, the fibers 6 are caused not to melt as much as possible in the close-adhesion process described below; therefore, the diametrical dimension of the fiber 6 included in the fiber-oriented material 100 can be taken to be the diametrical dimension of the fiber 6 included in the deposited body 7.

In such a case, the average diameter of the fibers 6 included in the deposited body 7 can be taken to be not less than 0.05 $\mu$m and not more than 5 $\mu$m. For example, the average diameter of the fibers 6 included in the deposited body 7 can be determined by imaging an electron micrograph of the surface of the deposited body 7 (referring to FIG. 9) and by randomly averaging the diametrical dimensions of one hundred fibers 6 confirmed by the electron micrograph.

If the fibers 6 that are included are in a closely-adhered state, the tensile strength of the fiber-oriented material 100 can be increased.

The tensile strength can be measured using a constant-rate-of-extension type tensile testing machine, etc. In such a case, for example, the tensile strength can be measured as the tensile strength (the maximum tensile load until fracture) conforming to JIS P8113.

Also, in the fiber-oriented material 100, the direction in which the fibers 6 extend is substantially aligned in a prescribed Z-direction region (thickness direction region). In other words, in the fiber-oriented material 100, the fibers 6 extend in about the same direction in a prescribed Z-direction region. In the specification, the fibers 6 extending in about the same direction is called the fibers 6 being "oriented."

Also, in the Z-direction (the thickness direction), the fiber-oriented material 100 includes a region where the fibers 6 are oriented in a first direction, and a region where the fibers 6 are oriented in a second direction crossing the first direction.

For example, in the case of the fiber-oriented material 100 illustrated in FIGS. 1A and 1B, the fibers 6 are oriented in the X-direction in the surface region of the fiber-oriented material 100. Also, the fibers 6 are oriented in the Y-direction in a region below the surface region of the fiber-oriented material 100. Although the fiber 6 and the fiber 6 are in the closely-adhered state as described above, only the state of the fibers 6 extending is drawn in FIGS. 1A and 1B to avoid complexity.

Here, if the fibers 6 are oriented, the tensile strength of the fiber-oriented material 100 in the orientation direction of the fibers 6 is high. On the other hand, the tensile strength of the fiber-oriented material 100 in directions orthogonal to the direction in which the fibers 6 extend is low.

However, because the fiber-oriented material 100 includes the region where the orientation direction of the fibers 6 is in the first direction and the region where the orientation direction of the fibers 6 is in the second direction crossing the first direction, the tensile strength can be high in the first direction and the second direction. In other words, according to the fiber-oriented material 100, the tensile strength can be increased in multiple directions.

Also, the directions in which the tensile strength is high can be changed by changing the angle between the first direction and the second direction. In other words, for directions orthogonal to the Z-direction, the direction in which the tensile strength is high can be set arbitrarily.

For example, the fiber-oriented material 100 illustrated in FIGS. 1A and 1B includes the region where the fibers 6 are oriented in the X-direction and the region where the fibers 6 are oriented in the Y-direction; therefore, the tensile strength can be high in the X-direction and the Y-direction.

Also, if the fiber-oriented material 100 further includes a region where the fibers 6 are oriented to be tilted 45° with respect to the X-direction, the tensile strength can be high also in the direction tilted 45° with respect to the X-direction. Therefore, the tensile strength can be high in three directions. That is, the orientation direction of the fibers 6 is the direction in which the tensile strength is high; therefore, if the number of regions having mutually-different orientation directions of the fibers 6 is high, the tensile strength becomes more isotropic.

The number and the combination of regions having mutually-different orientation directions of the fibers 6 and the orientation direction of the fibers 6 in each region are not limited to those illustrated in FIGS. 1A and 1B.

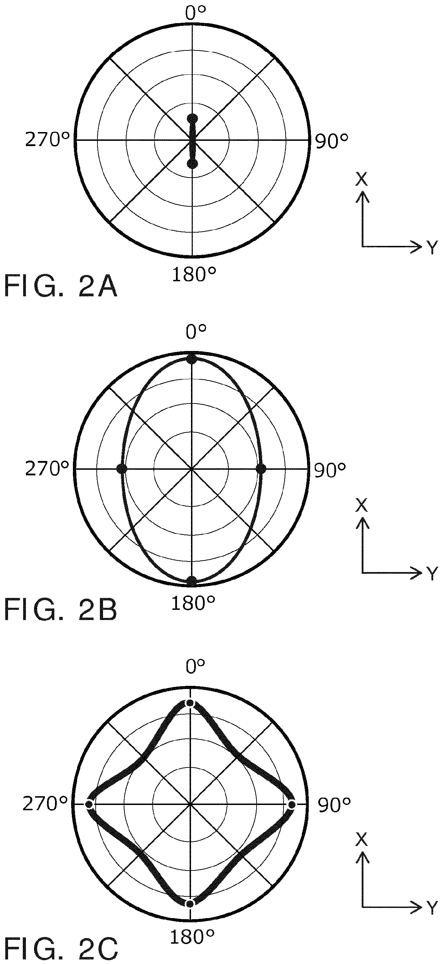

FIGS. 2A to 2C are schematic graphs for illustrating distributions of the tensile strength in directions orthogonal to the Z-direction.

The X-direction is taken as the directions of 0° and 180°; and the Y-direction is taken as the directions of 90° and 270°.

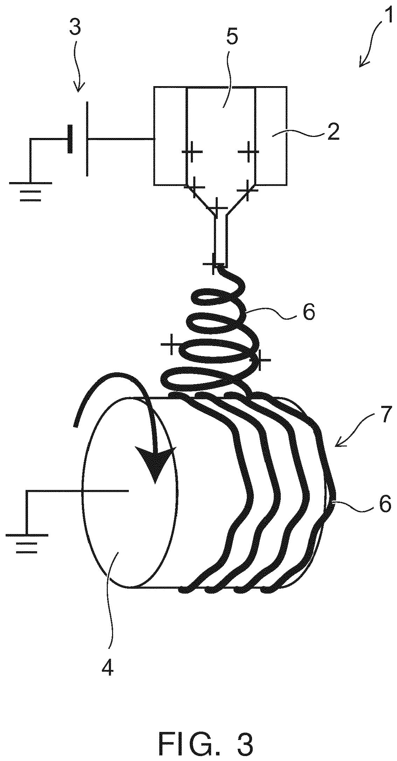

Also, FIG. 2A is the case of the deposited body 7 in which the fibers 6 are oriented in the X-direction. The deposited body 7 is formed by depositing the fibers 6 while pulling mechanically in one direction. For example, as shown in FIG. 3 described below, the deposited body 7 in which the included fibers 6 are oriented (the fibers 6 extend in about the same direction) can be formed by depositing the fibers 6 while pulling in the take-up direction by using an electrospinning apparatus 1 including a rotating collector 4. FIG. 2A is the case where the orientation direction of the fibers 6 of the deposited body 7 is set to the X-direction. The method for manufacturing the deposited body 7 is described below.

FIG. 2B is the case of a fiber-oriented sheet 70. In the fiber-oriented sheet 70, the fibers 6 are closely adhered to each other; and the fibers 6 are oriented in the X-direction. In such a case, compared to the deposited body 7, the directions in which the fibers 6 extend are aligned better. The fiber-oriented sheet 70 is formed by supplying a volatile liquid 201 to the deposited body 7 and by drying the deposited body 7 including the volatile liquid 201. The method for manufacturing the fiber-oriented sheet 70 can be similar to the method for manufacturing the fiber-oriented material 100 described below.

FIG. 2C is the case of the fiber-oriented material 100 according to the embodiment. However, the fiber-oriented material 100 includes a region where the fibers 6 are closely adhered to each other and the fibers 6 are oriented in the X-direction, and a region where the fibers 6 are closely adhered to each other and the fibers 6 are oriented in the Y-direction. The method for manufacturing the fiber-oriented material 100 is described below.

In the deposited body 7 as shown in FIG. 2A, the tensile strength in the X-direction is higher than the tensile strength in the Y-direction because the fibers 6 are oriented in the X-direction. However, the value of the tensile strength is low because the fibers 6 are simply deposited.

In the fiber-oriented sheet 70 as shown in FIG. 2B, the tensile strength in the X-direction can be high compared to the deposited body 7 because the fibers 6 are closely adhered to each other and because the directions in which the fibers 6 extend are aligned better. Also, the tensile strength in the Y-direction can be high compared to the deposited body 7 because the fibers 6 are closely adhered to each other.

As shown in FIG. 2C, the fiber-oriented material 100 includes the region where the fibers 6 are closely adhered to each other and the fibers 6 are oriented in the X-direction, and the region where the fibers 6 are closely adhered to each other and the fibers 6 are oriented in the Y-direction; therefore, the tensile strength can be high in the X-direction and the Y-direction. Also, compared to the fiber-oriented sheet 70, the tensile strength can be high in directions between the X-direction and the Y-direction.

In other words, the tensile strength has maxima in two tensile directions (the direction of 0° and the direction of 90°) at angles in a range not less than 0° but less than 180° between the tensile directions and a line passing through the center of the fiber-oriented material 100. In such a case, the tensile directions in which the tensile strength has maxima are the orientation directions of the fibers 6. In the fiber-oriented material 100 illustrated in FIG. 2C, the region where the fibers 6 are oriented in the X-direction and the region where the fibers 6 are oriented in the Y-direction are provided; therefore, the tensile directions in which the tensile strength has maxima are the direction of 0° and the direction of 90°.

In such a case, if the number of regions having mutually-different orientation directions of the fibers 6 is high, the number of tensile directions in which the tensile strength has maxima also is high. In other words, the tensile strength has maxima in two or more tensile directions at angles in a range not less than 0° but less than 180° between the tensile directions and the line passing through the center of the fiber-oriented material 100.

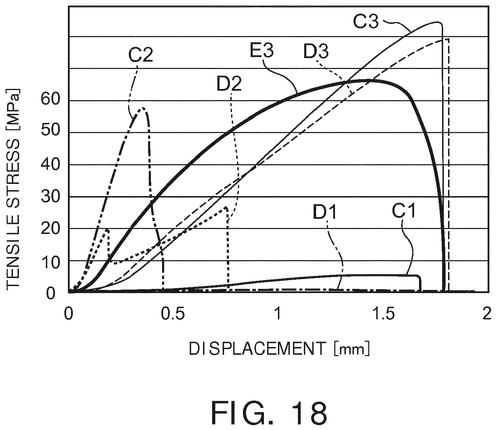

For example, in the case where the material of the fiber 6 is collagen, *F1* and *F2* can be set to be 30 MPa or more, where *F1* is the tensile strength in the X-direction, and *F2* is the tensile strength in a direction perpendicular to the Z-direction and different from the X-direction. For example, *F1* and *F2* could be set to 70 MPa or more in the case where the direction that is perpendicular to the Z-direction and different from the X-direction is the Y-direction (referring to FIG. 18). Also, the minimum value of the tensile strength in directions between the X-direction and the Y-direction can be set to 67 MPa or more.

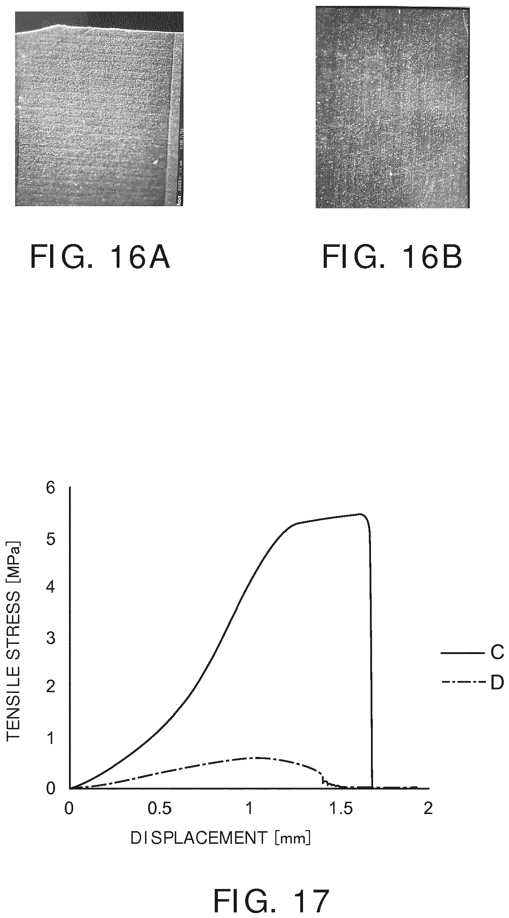

In the case where the material of the fiber 6 is collagen, the tensile strength F1 in the X-direction of the deposited body 7 is about 3.1 MPa to 5.5 MPa; and the tensile strength F2 in the Y-direction is about 0.5 MPa to 0.6 MPa (referring to FIG. 17).

Also, in the case where the material of the fiber 6 is collagen, the tensile strength F1 in the X-direction of the fiber-oriented sheet 70 is about 60 MPa; and the tensile strength F2 in the Y-direction is about 27 MPa (referring to FIG. 18).

In such a case, *F2/F1* for the deposited body 7 is about 0.09 to 0.19; and *F2/F1* for the fiber-oriented sheet 70 is about 0.45.

Conversely, *F2/F1* for the fiber-oriented material 100 ideally is 1. However, actually, there is fluctuation of the number of the fibers 6 and/or the directions in which the fibers 6 extend between the regions; therefore, *F2/F1* is as in the following formula.

$$0.7 \leq F2/F1 \leq 1.5$$

Also, the regions of the fiber-oriented material 100 each are closely adhered in the thickness direction. Therefore, the tensile strength is 0.18 MPa or more in the thickness direction of the fiber-oriented material 100.

The tensile strength is about 0.00052 MPa in the thickness direction of the deposited body 7.

Also, in an elongated polymeric substance, there is a tendency for the direction in which the long axes of the molecules extend (the molecular axis) to be the direction in which the polymeric substance (the fiber 6) extends. Therefore, by verifying the direction in which the long axes of the molecules extend at the surface of the fiber-oriented material 100, the direction in which the fibers 6 extend can be known; and it can be known also whether or not the fibers 6 are oriented.

The direction in which the long axes of the molecules extend can be known by using a structure determination method corresponding to the type of the polymeric substance.

For example, Raman spectroscopy can be used in the case of polystyrene, etc.; and polarized absorption spectroscopy can be used in the case of polyimide, etc.

Here, the case is described as an example where the polymeric substance is an organic compound including an amide group such as collagen, etc. For example, in the case of an organic compound including an amide group, by using a polarized FT-IR-ATR method (a polarized Fourier transform infrared spectroscopy) which is one type of infrared spectroscopy, the direction in which the long axes of the molecules extend can be known; and it can be known also whether or not the fibers 6 are oriented.

In such a case, the direction in which the long axes of the molecules extend can be determined by analyzing the surface of the fiber-oriented material 100 using the polarized FT-IR-ATR method as follows.

The absorption intensity for a wave number of 1640 cm$^{-1}$ is taken as *T1*; and the absorption intensity for a wave number of 1540 cm$^{-1}$ is taken as T2.

In such a case, the absorption intensity T1 is the absorption intensity in a direction orthogonal to the direction in which the long axes of the molecules extend. The absorption intensity T2 is the absorption intensity in the direction in which the long axes of the molecules extend.

Therefore, if the absorbance ratio R1 (*T1/T2*) is small in a prescribed polarization direction, it can be known that many molecules extend in the polarization direction.

Also, *R1/R2* can be used as an orientation degree parameter by determining the maximum absorbance ratio R1 and the minimum absorbance ratio R2 by measuring the absorbance ratio by changing the angle between the prescribed polarization direction and the fiber-oriented material 100.

*R1/R2* is large for the fiber-oriented material 100 according to the embodiment. For example, as described below, *R1/R2* is 1.05 or more.

*R1/R2* being large means that the directions in which the long axes of the molecules extend are aligned.

Also, as described above, there is a tendency for the direction in which the long axes of the molecules extend to be the direction in which the fibers 6 extend in an elongated polymeric substance. Therefore, *R1/R2* being large means that the fibers 6 are oriented (the directions in which the fibers 6 extend are aligned).

As described above, the tensile strength can be increased in multiple directions for the fiber-oriented material 100 according to the embodiment. Therefore, it is possible to be used in technical fields (e.g., general industrial fields, medical fields such as surgical treatment, etc.) in which mechanical strength is necessary.

Further, for example, in designated technical fields such as the three-dimensional culture of biological tissue, etc., there are cases where it is important for the directions in which the long axes of the molecules of the polymeric substance included in the fiber 6 extend to be aligned (*R1/R2* being large).

The directions in which the long axes of the molecules of the polymeric substance included in the fiber 6 extend are aligned (*R1/R2* is large) for the fiber-oriented material 100 according to the embodiment; therefore, it is possible to be used also in designated technical fields such as the three-dimensional culture of biological tissue, etc.

(Method for manufacturing fiber-oriented material 100)

A method for manufacturing the fiber-oriented material 100 according to the embodiment will now be described.

First, by using the electrospinning apparatus 1, the deposited body 7 is formed by forming the fine fiber 6 and by depositing the fiber 6 that is formed. Also, the directions in which the fibers 6 extend in the deposited body 7 are aligned as much as possible by pulling the fiber 6 mechanically in one direction when depositing the fiber 6 that is formed.

FIG. 3 is a schematic view for illustrating the electrospinning apparatus 1.

As shown in FIG. 3, a nozzle 2, a power supply 3, and the collector 4 are provided in the electrospinning apparatus 1.

A hole for discharging a source material liquid 5 is provided in the nozzle 2.

The power supply 3 applies a voltage having a prescribed polarity to the nozzle 2. For example, the power supply 3 applies the voltage to the nozzle 2 so that the potential difference between the nozzle 2 and the collector 4 is 10 kV or more. The polarity of the voltage applied to the nozzle 2 may be positive or may be negative. The power supply 3 illustrated in FIG. 3 applies a positive voltage to the nozzle 2.

The collector 4 is provided on the side of the nozzle 2 where the source material liquid 5 is discharged. The collector 4 is grounded. A voltage that has the reverse polarity of the voltage applied to the nozzle 2 may be applied to the collector 4. Also, the collector 4 has a circular columnar configuration and can rotate.

The source material liquid 5 is a liquid in which a polymeric substance is dissolved in a solvent.

The polymeric substance is not particularly limited and can be modified appropriately according to the material properties of the fiber 6 to be formed. For example, the polymeric substance can be similar to those described above.

It is sufficient for the solvent to be able to dissolve the polymeric substance. The solvent can be modified appropriately according to the polymeric substance to be dissolved.

The solvent can be, for example, water, an alcohol (methanol, ethanol, isopropyl alcohol, trifluoroethanol, hexafluoro-2-propanol, etc.), acetone, benzene, toluene, cyclohexanone, N,N-dimethylacetamide, N,N-dimethylformamide, N-methyl-2-pyrrolidone, dimethylsulfoxide, etc.

Also, an additive such as an inorganic electrolyte, an organic electrolyte, a surfactant, a defoamer, etc., may be used.

The polymeric substance and the solvent are not limited to those illustrated.

The source material liquid 5 collects at the vicinity of the outlet of the nozzle 2 due to surface tension.

The power supply 3 applies the voltage to the nozzle 2. Then, the source material liquid 5 that is at the vicinity of the outlet is charged with the prescribed polarity. In the case of the illustration in FIG. 3, the source material liquid 5 that is at the vicinity of the outlet is charged to be positive.

Because the collector 4 is grounded, an electric field is generated between the nozzle 2 and the collector 4. Then, when the electrostatic force that acts along the lines of electric force becomes larger than the surface tension, the source material liquid 5 that is at the vicinity of the outlet is drawn out toward the collector 4 by an electrostatic force. The source material liquid that is drawn out is elongated; and the fiber 6 is formed by the volatilization of the solvent included in the source material liquid. The deposited body 7 is formed by the fiber 6 that is formed being deposited on the rotating collector 4. Also, the fiber 6 is pulled in the rotation direction when depositing the fiber 6 on the rotating collector 4. The directions in which the fibers 6 extend in the deposited body 7 are aligned by pulling the fiber 6 mechanically in one direction when depositing the fiber 6 that is formed.

The method for pulling the fiber 6 mechanically in one direction is not limited to those illustrated. For example, a gas can be caused to flow in the direction in which the fiber 6 is drawn out; and the fiber 6 can be pulled mechanically in one direction by the gas flow.

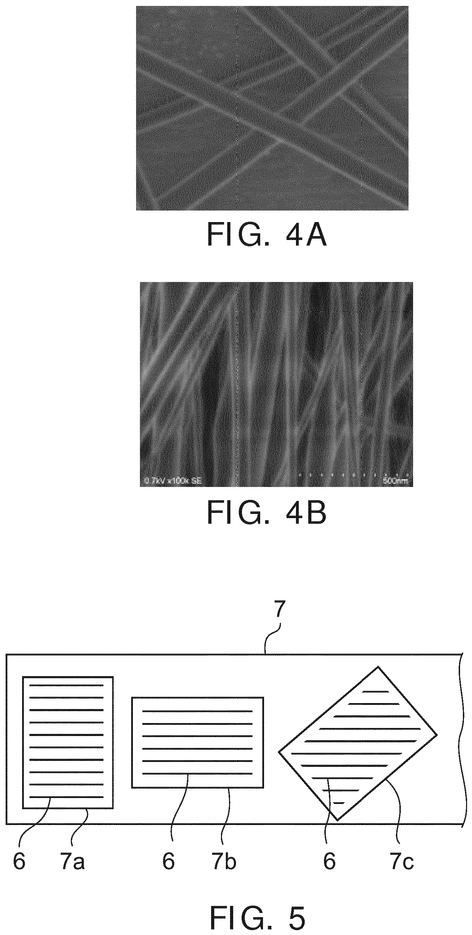

FIGS. 4A and 4B are electron micrographs of the deposited bodies 7.

FIG. 4A is an electron micrograph of a case where the fiber 6 is deposited on a stationary collector having a flat plate configuration.

FIG. 4B is an electron micrograph of a case where the fiber 6 is deposited on the rotating collector 4.

It can be seen from FIGS. 4A and 4B that if the fiber 6 that is formed is pulled mechanically in one direction when depositing the fiber 6, the directions in which the fibers 6 extend in the deposited body 7 can be somewhat aligned. Also, the space (the gaps) between the fibers 6 can be reduced.

However, a disturbance due to wind and/or electric fields occurs when mechanically pulling the fiber 6 in the one direction by the gas flow and/or the rotating collector 4. Therefore, the alignment of the directions in which the fibers 6 extend is limited when pulling the fiber 6 only mechanically in the one direction.

Also, even if the directions in which the fibers 6 extend can be aligned, the alignment is limited to the one direction.

Also, the fibers 6 cannot be closely adhered to each other.

Therefore, in the method for manufacturing the fiber-oriented material 100 according to the embodiment, the fibers 6 are closely adhered to each other and the fibers 6 are oriented by performing the close-adhesion process described below.

First, a deposited body sheet 7a (corresponding to an example of a first deposited body sheet), a deposited body sheet 7b (corresponding to an example of a second deposited body sheet), and a deposited body sheet 7c are cut out from the deposited body 7 so that the fibers 6 that extend in the desired directions are included.

FIG. 5 is a schematic view for illustrating the cutting out of deposited body sheets 7a to 7c.

As shown in FIG. 5, if the deposited body sheets 7a to 7c are cut out by changing the positions in the rotation direction of the deposited body sheets 7a to 7c when referenced to the direction in which the fibers 6 extend in the deposited body 7, the deposited body sheets 7a to 7c including the fibers 6 extending in the desired directions can be obtained.

For example, the deposited body sheet 7a can be taken as a sheet in which the fibers 6 extend in the X-direction. The deposited body sheet 7b can be taken as a sheet in which the fibers 6 extend in the Y-direction. The deposited body sheet 7c can be taken as a sheet in which the fibers 6 extend to be tilted 45° with respect to the X-direction.

The number and/or the configurations of the deposited body sheets and the direction in which the fibers 6 extend in each deposited body sheet are not limited to those illustrated.

A case will now be described as an example where the fiber-oriented material 100 is manufactured using the deposited body sheets 7a and 7b.

Then, by performing the close-adhesion process, the fibers 6 are closely adhered to each other and the fibers 6 are oriented for the fibers 6 included in the deposited body sheets 7a and 7b.

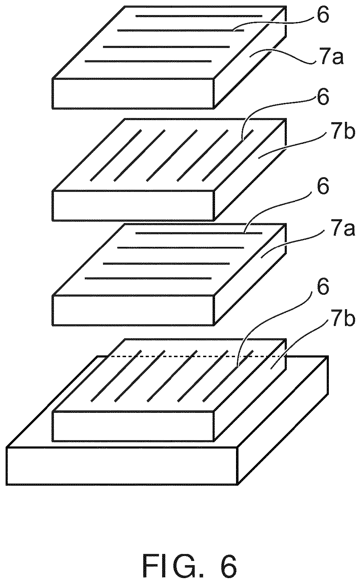

FIG. 6 to FIG. 8B are schematic views for illustrating the close-adhesion process.

First, as shown in FIG. 6, the deposited body sheets 7a and 7b are placed to be overlaid on a base, etc. At this time, the deposited body sheets 7a and 7b can be placed alternately as shown in FIG. 6; the multiple deposited body sheets 7b can be placed; the multiple deposited body sheets 7a can be placed on the multiple deposited body sheets 7b; or the deposited body sheet 7a can be placed initially. In other words, the order of the placement and/or the combination of the deposited body sheets 7a and 7b can be modified appropriately.

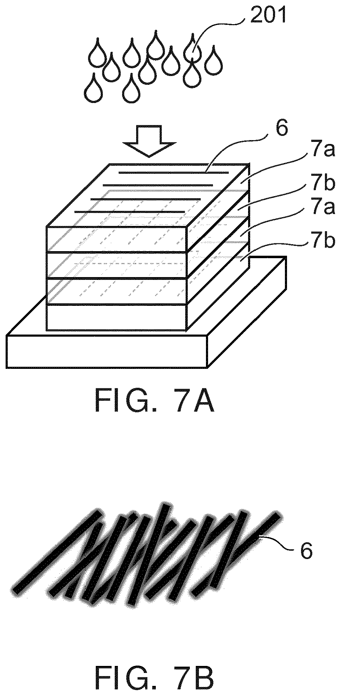

Then, as shown in FIG. 7A, the volatile liquid 201 is supplied to the stacked deposited body sheets 7a and 7b. For example, there are methods in which the stacked deposited body sheets 7a and 7b are immersed in the liquid 201, the liquid 201 having a mist-like form is sprayed, or a cloth in which the liquid 201 is permeated is placed on the stacked deposited body sheets 7a and 7b.

Although the volatile liquid 201 is not particularly limited, it is favorable for the volatile liquid 201 not to melt the fibers 6 as much as possible. The volatile liquid 201 can be, for example, an alcohol (methanol, ethanol, isopropyl alcohol, etc.), an alcohol aqueous solution, acetone, acetonitrile, ethylene glycol, etc.

As shown in FIG. 7B, the fibers 6 are not closely adhered to each other by only supplying the volatile liquid 201 to the stacked deposited body sheets 7a and 7b.

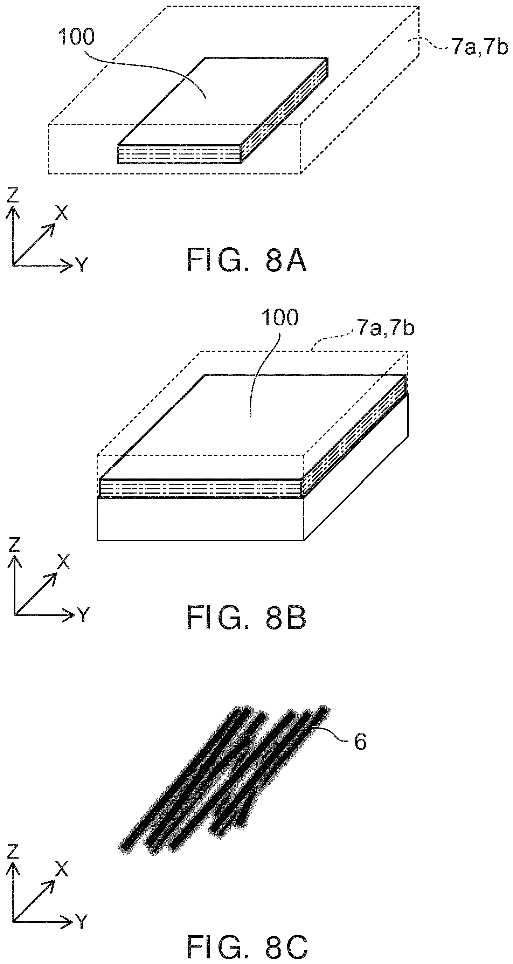

Then, as shown in FIGS. 8A to 8C, the deposited body sheets 7a and 7b that include the volatile liquid 201 are dried.

The drying method is not particularly limited. For example, natural drying of the deposited body sheets 7a and 7b including the volatile liquid 201 can be performed inside a sealed container. Thus, it is easy to control the evaporation rate of the volatile liquid 201.

In such a case, if the deposited body sheets 7a and 7b that include the volatile liquid 201 are dried, the deposited body sheets 7a and 7b contract in the X, Y, and Z-directions as shown in FIG. 8A.

Conversely, if the adhesion force between the base and the deposited body sheets 7a and 7b is utilized, the contraction amount in the X and Y-directions can be smaller than the contraction amount in the Z-direction for the deposited body sheets 7a and 7b as shown in FIG. 8B.

Here, a capillary force acts in the volatile liquid 201 between the fiber 6 and the fiber 6. In other words, the force is applied in directions causing the fiber 6 and the fiber 6 to closely adhere. Therefore, as the drying progresses (the volatile liquid 201 is removed), the distance between the fiber 6 and the fiber 6 is reduced; and the state of the fibers 6 becomes a closely-adhered state as shown in FIG. 8C. Also, the fibers 6 are oriented. The close adhesion of the fibers 6 to each other and the orientation of the fibers 6 occur in each of the stacked deposited body sheets 7a and 7b. Also, the deposited body sheet 7a and the sheet 7b are closely adhered and formed as one body.

Therefore, the fiber-oriented material 100 that includes two of each of the region where the fibers 6 are closely adhered to each other and the fibers 6 are oriented in the X-direction and the region where the fibers 6 are closely adhered to each other and the fibers 6 are oriented in the Y-direction is formed.

Thus, the fiber-oriented material 100 according to the embodiment can be manufactured.

The fiber-oriented sheet 70 can be manufactured by using only the deposited body sheet 7a.

FIG. 9 is an electron micrograph of the surface of the deposited body sheets 7a and 7b. FIG. 9 illustrates the state of the fibers 6 before the volatile liquid 201 is supplied.

FIGS. 10A and 10B are electron micrographs of the surface of the fiber-oriented material 100.

FIG. 10A is the electron micrograph of the surface of the fiber-oriented material 100.

FIG. 10B is the electron micrograph of the surface of the fiber-oriented material 100.

FIGS. 10A and 10B illustrate the state of the fibers 6 after the volatile liquid 201 is removed (dried).

It can be seen from FIG. 9 and FIGS. 10A and 10B that the state becomes a state in which the fibers 6 are closely adhered to each other if the close-adhesion process described above is performed.

If the state becomes the state in which the fibers 6 are closely adhered to each other, the directions in which the fibers 6 extend can be aligned further. In other words, the fibers 6 are oriented in the fiber-oriented material 100.

The fibers 6 being oriented and the state in which the fibers 6 are closely adhered to each other can be confirmed for the fiber-oriented material 100 by using the anisotropy of the tensile strength, the direction in which the long axes of the molecules extend, etc., described above.

Further, the direction of the orientation originating in the fibers 6 can be confirmed by using an optical microscope.

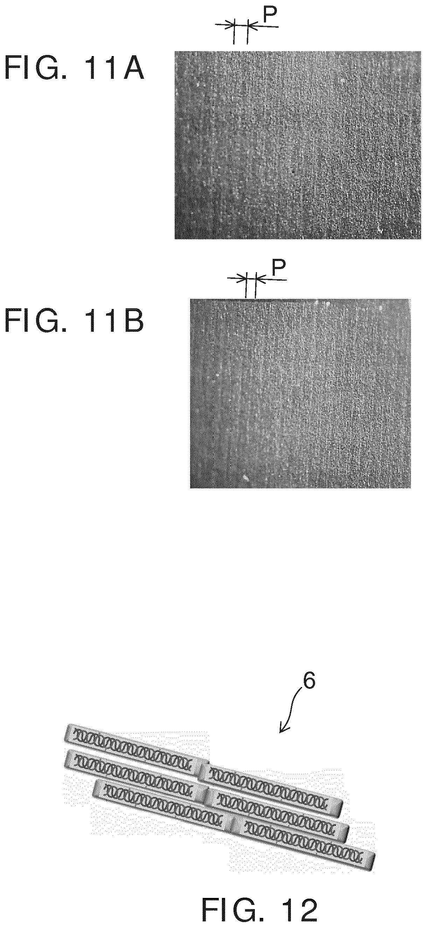

FIGS. 11A and 11B are photomicrographs of the surface of the fiber-oriented material 100.

FIG. 11A is a photomicrograph of the surface of the fiber-oriented material 100.

FIG. 11B is a photomicrograph of the surface of the fiber-oriented material 100.

It can be seen from FIGS. 11A and 11B that a stripe structure having a pitch dimension P of about 100 $\mu$m can be confirmed by observing the surface of the fiber-oriented material 100 using an optical microscope.

It is considered that such a stripe structure is formed because bundles of the multiple fibers 6 become collections and contract at a constant spacing as the volatile liquid 201 is removed and the fibers 6 become closely adhered to each other.

(Examples)

The fiber-oriented material 100 based on examples will now be described in further detail. However, the invention is not limited to the following examples.

First, the deposited body 7 was formed as follows.

The polymeric substance was collagen which is a bio-affinity material.

The solvent was a mixed solvent of trifluoroethanol and purified water.

The source material liquid 5 was a mixed liquid of 2 wt% to 10 wt% of collagen, 80 wt% to 97 wt% of trifluoroethanol, and 1 wt% to 15 wt% of purified water.

The electrospinning apparatus 1 included the rotating collector 4 illustrated in FIG. 3.

The fibers 6 that were formed by the electrospinning apparatus 1 included 10 wt% of collagen or more.

Also, the diametrical dimension of the fiber 6 was about 70 nm to 180 nm.

Also, the directions in which the fibers 6 extend in the deposited body 7 were somewhat aligned by mechanically pulling the fibers 6 in one direction using the rotating collector 4. In this case, the state of the fibers 6 in the deposited body 7 was as shown in FIG. 9 described above.

FIG. 12 is a schematic view for illustrating the orientation of the collagen molecules of the fibers 6 formed by the electrospinning apparatus 1.

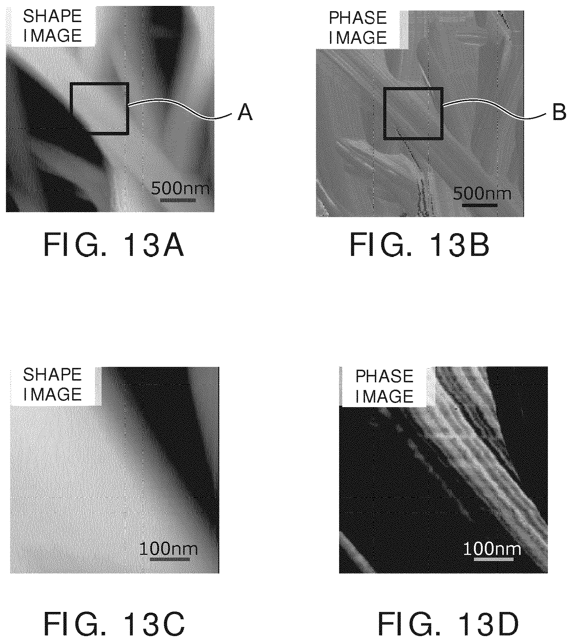

FIGS. 13A to 13D are atomic force micrographs of the surface of the fibers 6.

FIG. 13A is a shape image. FIG. 13B is a phase image. FIG. 13C is an enlarged photograph of portion A in FIG. 13A. FIG. 13D is an enlarged photograph of portion B in FIG. 13B.

By acquiring the phase image using the atomic force microscope, the elastic modulus change of the surface of the fibers 6 can be analyzed. In other words, by the phase image, contrast having line configurations originating in the hardness (elastic modulus) difference in the surface of the fibers 6 can be confirmed.

It can be seen from FIGS. 13A to 13D that contrast having line configurations originating in the hardness difference in the axis direction of the fibers 6 can be confirmed by analyzing the surface of the fibers 6 formed by the electrospinning apparatus 1 using an atomic force microscope.

It is considered that a high degree of molecular orientation can be obtained by orienting the fibers 6 having such a configuration.

Then, the deposited body sheets 7a and 7b were cut out from the deposited body 7; and the deposited body sheets 7a and 7b were stacked.

Then, ethanol was supplied to the stacked deposited body sheets 7a and 7b. The concentration of the ethanol was 40 wt% to substantially 100 wt%. The supply of the ethanol was performed in ambient air. The temperature of the ethanol was room temperature.

Then, the deposited body sheets 7a and 7b that included the ethanol were dried.

The drying was performed inside a sealed container. The pressure inside the container was set to atmospheric pressure. The temperature inside the container was set to room temperature. In other words, natural drying of the deposited body sheets 7a and 7b including the ethanol was performed inside the sealed container.

In such a case, by drying the deposited body sheets 7a and 7b including the ethanol as described above, the deposited body sheets 7a and 7b that are contracted in the X, Y, and Z-directions can be obtained; or the deposited body sheets 7a and 7b in which the contraction amount in the X and Y-directions is smaller than the contraction amount in the Z-direction can be obtained by utilizing the adhesion force between the base and the deposited body sheets 7a and 7b. In the case where the adhesion force between the base and the deposited body sheets 7a and 7b is utilized, it is sufficient to use a base including polystyrene.

Thus, the fiber-oriented material 100 that includes collagen was manufactured. In such a case, the state of the fibers 6 in the fiber-oriented material 100 was as shown in FIGS. 10A and 10B and FIGS. 11A and 11B described above.

The gaps that were included in the fiber-oriented material 100 were slight enough not to be confirmable in FIGS. 10A and 10B and FIGS. 11A and 11B.

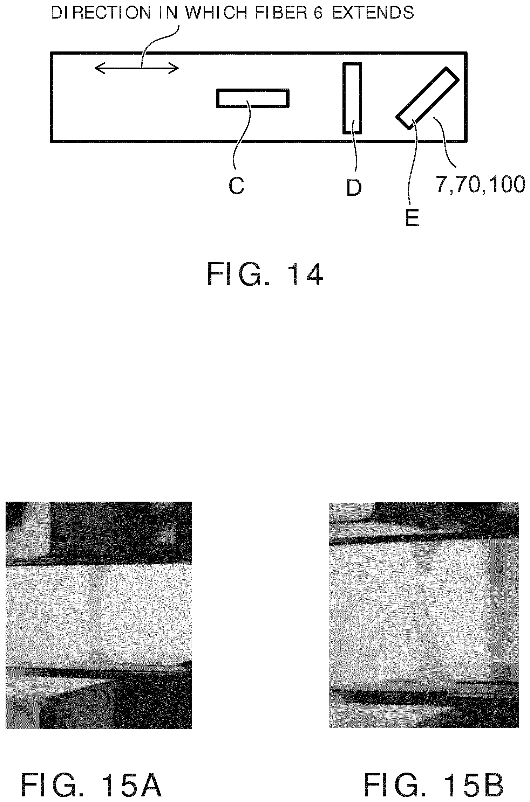

FIG. 14 is a schematic view for illustrating test pieces C, D, and E used in a tensile test.

As shown in FIG. 14, a test piece in which the longitudinal direction of the test piece is parallel to the direction in which the fibers 6 extend was used as the test piece C; a test piece in which the longitudinal direction of the test piece is perpendicular to the direction in which the fibers 6 extend was used as the test piece D; and a test piece in which the angle between the longitudinal direction of the test piece and the direction in which the fibers 6 extend is 45° was used as the test piece E.

FIGS. 15A and 15B are photographs for illustrating states of the tensile test.

FIG. 15A is a photograph for illustrating the state at the start of the tensile test. FIG. 15B is a photograph for illustrating the state at fracture of the test piece.

FIG. 16A is a photomicrograph of the test piece D.

FIG. 16B is a photomicrograph of the test piece C.

FIG. 17 is a graph for illustrating the result of the tensile test of the deposited body 7.

The thicknesses of the test pieces C and D including collagen were set to about 90 $\mu$m; the widths were set to 2 mm; and the lengths were set to 12 mm. Also, the elongation speed was set to 1 mm/min.

It can be seen from FIG. 17 that the tensile strength of the test piece C was 5.6; and the tensile elongation rate was 9% to 11%.

The tensile strength is taken to be the maximum stress per cross-sectional area.

FIG. 18 is a graph for comparing the result of the tensile test of the deposited body 7, the result of the tensile test of the fiber-oriented sheet 70, and the result of the tensile test of the fiber-oriented material 100.

Test pieces C1 and D1 are test pieces formed from the deposited body 7; test pieces C2 and D2 are test pieces formed from the fiber-oriented sheet 70 (the deposited body 7 for which the close-adhesion process described above is performed); and test pieces C3, D3, and E3 are test pieces formed from the fiber-oriented material 100.

The thicknesses of the test pieces C1, C2, C3, D1, D2, D3, and E3 including collagen were set to about 30 $\mu$m to 150 $\mu$m; the widths were set to 2 mm; and the lengths were set to 12 mm. Also, the elongation speed was set to 1 mm/min.

Here, a hard surface where the fibers 6 are closely adhered more finely due to the ethanol treatment is formed on the base side of the fiber-oriented sheet 70 in the case where the base is used to form the fiber-oriented sheet 70.

Therefore, for the test piece D2, it is considered that a peak of the tensile stress such as that shown in FIG. 18 occurred because the hard surface fractured in the initial stage of the tensile test.

*F1* was 85 MPa, and *F2* was 79 MPa, where *F1* is the tensile strength of the test piece C3 and *F2* is the tensile strength of the test piece D3.

It is apparent from FIG. 18 that it was proved that the tensile strength can be increased in multiple directions by using the fiber-oriented material 100.

Also, the direction in which the long axes of the molecules extend was determined by analyzing the surface of the fiber-oriented material 100 by using a polarized FT-IR-ATR method. The polarized FT-IR-ATR method is a method in which an optical prism having a high refractive index is closely adhered to the sample surface; infrared light is irradiated on the sample surface from the optical prism side; and the region to a depth of about 1 $\mu$m from the sample surface is measured by utilizing the condition for total internal reflection at the sample surface.

In this case, the measuring device, the measurement conditions, etc., were as follows.

Measuring device: FTS-55A (FT-IR made by Bio-Rad Digilab)
Measuring mode: Attenuated total reflection (Attenuated Total Reflection, ATR)

Measurement conditions:

Light source: Special ceramic
Detector: DTGS
Resolution: 4 cm$^{-1}$
Cumulative number: 64 times
IRE: Ge
Incident angle: 45°
Attachment: One reflection ATR attachment (Seagull)

The absorption intensity T1 for a wave number of 1640 cm$^{-1}$ was 0.075; and the absorption intensity T2 for a wave number of 1540 cm$^{-1}$ was 0.043.

The absorbance ratio R1 (*T1/T2*) in a prescribed polarization direction was 1.748; and the absorbance ratio R2 was 1.575 when the orientation of the fiber-oriented material 100 was rotated 90°.

Therefore, the orientation degree parameter (*R1/R2*) of the fiber-oriented material 100 was 1.13.

According to knowledge obtained by the inventors, the orientation degree parameter (*R1/R2*) of the fiber-oriented material 100 can be 1.05 or more.

The orientation degree parameter (*R1/R2*) was 1.04 when similarly analyzing the surface of the deposited body 7.

Therefore, it was proved that the directions in which the long axes of the molecules extend are aligned for the fiber-oriented material 100 because the orientation degree parameter (*R1/R2*) is large. Also, it was proved that the fibers 6 are oriented (the fibers 6 extend in about the same direction) in the fiber-oriented material 100.

[Table 1]

| | MATERIAL | THICKNESS (mm) | VOLATILE SOLVENT | STACKING | FINAL THICKNESS (μm) | FIBER ADHESION | ORIENTATION DEGREE PARAMETER | TENSILE STRENGTH RATIO (Mpa) 0° | 45° | 90° | TENSILE STRENGTH RATIO 0°/90° | THICKNESS DIRECTION | TENSILE ELONGATION 0° (%) | 45° (%) | 90° (%) |
|---|---|---|---|---|---|---|---|---|---|---|---|---|---|---|---|
| EXAMPLE 1 | COLLAGEN | 0.60 | ETHANOL | TWO-AXIS ORTHOGONAL TYPE, FOUR LAYERS | 94 | HIGH | 1.05 | 85 | 67 | 79 | 1.1 | >0.18 | 15% | - | 15% |
| COMPARATIVE EXAMPLE 1 | COLLAGEN | 0.025 | - | SINGLE LAYER | 25 | LOW | 1.03 | - | - | - | - | - | - | - | - |
| COMPARATIVE EXAMPLE 1 | | 0.10 | - | SINGLE LAYER | 100 | LOW | 1.03 | 3.1 | - | 0.54 | 5.7 | - | 11% | - | 9% |
| COMPARATIVE EXAMPLE 1 | | 0.15 | - | SINGLE LAYER | 150 | LOW | 1.03 | 5.5 | - | 0.60 | 9.1 | - | 14% | - | 9% |
| COMPARATIVE EXAMPLE 1 | COLLAGEN | 0.025 | ETHANOL | SINGLE LAYER | 5 | HIGH | 1.13 | - | - | - | - | - | - | - | - |
| COMPARATIVE EXAMPLE 1 | | 0.10 | ETHANOL | SINGLE LAYER | 20 | HIGH | - | 88 | - | 28 | 3.2 | - | 7% | - | 6% |
| COMPARATIVE EXAMPLE 1 | | 0.10 | WATER/ETHANOL=40/60 | SINGLE LAYER | 20 | HIGH | 1.10 | - | - | - | - | - | - | - | - |
| COMPARATIVE EXAMPLE 1 | | 0.10 | WATER/ETHANOL=40/60 | SINGLE LAYER | 20 | HIGH | 1.10 | - | - | - | - | - | - | - | - |
| COMPARATIVE EXAMPLE 1 | | 0.15 | ETHANOL | SINGLE LAYER | 30 | HIGH | - | 59 | - | 27 | 2.2 | - | 3% | - | 6% |
| COMPARATIVE EXAMPLE 1 | POLYIMIDE | 0.11 | ETHANOL | SINGLE LAYER | 90 | LOW | - | 6.7 | - | 1.0 | 6.5 | - | 16% | - | 57% |

Table 1 is a table for illustrating the effects of the "close-adhesion process."

"0°" inside Table 1 illustrates a direction parallel to the orientation direction of the fibers 6. "90°" illustrates a direction perpendicular to the orientation direction of the fibers 6. "45°" illustrates a direction having an angle of 45° from the orientation direction of the fibers 6.

It can be seen from Table 1 that the invention is applicable not only to a bio-affinity material such as collagen, etc., but also to an industrial material such as polyimide, etc.

In other words, by performing the "close-adhesion process" described above, the improvement of the degree of molecular orientation, the increase of the tensile strength, etc., can be realized even for a fiber-oriented material 100 made of an industrial material.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. Moreover, above-mentioned embodiments can be combined mutually and can be carried out.

**Claims**

1. A fiber-oriented material (100) comprising a plurality of fibers (6):

   the fibers (6) included in the fiber-oriented material (100) being in a closely-adhered state,
   a tensile strength of the fiber-oriented material (100) having maxima in two or more tensile directions at angles in a range not less than 0° but less than 180°, the angles being between a line and the tensile directions, the line passing through a center of the fiber-oriented material (100); wherein the fiber-orientated material is produced by:

      forming a deposited body (7) by forming the fiber (6) using electrospinning and by depositing the fiber (6);
      wherein the forming of the deposited body includes (7) aligning an extension direction of the fiber (6) in the deposited body (7) by pulling the fiber in one direction;
      cutting out a plurality of deposited body sheets (7a to 7c) from the deposited body (7);
      stacking the plurality of deposited body sheets (7a to 7c);
      supplying a liquid to the stacked plurality of deposited body sheets (7a to 7c), the liquid being volatile; and
      drying the stacked plurality of deposited body sheets (7a to 7c) including the volatile liquid, as the drying progresses, the distance between the fibers (6) is reduced by a capillary force acting in the volatile liquid between fibers, the state of the fibers (6) becomes a closely-adhered state, and at least part of adjacent fibers (6) is fused to each other; wherein the cutting out of the plurality of deposited body sheets as the drying progresses includes cutting out a first deposited body sheet (7a) including the fiber (6) extending in a first direction, and cutting out a second deposited body sheet (7b) including the fiber (6) extending in a second direction, the second direction crossing the first direction, wherein the fiber extending in a first direction, and the fiber (6) extending in a second direction of the stacked body sheets are oriented at an angle of less than 180° to each other.

2. The fiber-oriented material (100) according to claim 1, wherein the tensile strength is 30 MPa or more in the tensile directions where the tensile strength has the maxima.

3. The fiber-oriented material (100) according to claim 1, the fiber-oriented material (100) comprising a first region and a second region:

   the first region and the second region being stacked, the first region where a plurality of first fibers (6) are oriented in a first direction, the first fibers (6) included in the first region being in a closely-adhered state, the second region where a plurality of second fibers (6) are oriented in a second direction, the second fibers (6) included in the second region being in a closely-adhered state, the second direction crossing the first direction.

4. The fiber-oriented material 100 according to claim 3, wherein a tensile strength in the first direction and the tensile strength in the second direction are 30 MPa or more.

5. The fiber-oriented material 100 according to any one of claims 1 to 4, wherein the fiber includes 10 wt% or more of a bio-affinity material.

6. The fiber-oriented material (100) according to any one of claims 1 to 5, wherein

   the fiber (6) includes an amide group, and

an orientation degree parameter expressed by the following formula is 1.05 or more when a surface of the fiber-oriented material is analyzed using a polarized FT-IR-ATR method:

the orientation degree parameter is $R1/R2$;
R1 is a maximum absorbance ratio obtained when measuring by modifying an angle between a polarization direction and the fiber-oriented material (100);
$R2$ is a minimum absorbance ratio obtained when measuring by modifying the angle between the polarization direction and the fiber-oriented material (100); and
the absorbance ratio is $T1/T2$, where $T1$ is an absorption intensity for a wave number of 1640 $cm^{-1}$, and T2 is an absorption intensity for a wave number of 1540 $cm^{-1}$.

7. The fiber-oriented material (100) according to any one of claims 3 to 5, wherein the first fiber and the second fiber include the same material.

8. A method for manufacturing a fiber-oriented material (100), comprising:

forming a deposited body (7) by forming a fiber (6) using electrospinning and by depositing the fiber (6); wherein the forming of the deposited body includes (7) aligning an extension direction of the fiber (6) in the deposited body (7) by pulling the fiber in one direction;
cutting out a plurality of deposited body sheets (7a to 7c) from the deposited body (7);
stacking the plurality of deposited body sheets (7a to 7c);
supplying a liquid to the stacked plurality of deposited body sheets (7a to 7c), the liquid being volatile; and
drying the stacked plurality of deposited body sheets (7a to 7c) including the volatile liquid, as the drying progresses, the distance between the fibers (6) is reduced by a capillary force acting in the volatile liquid between fibers, the state of the fibers (6) becomes a closely-adhered state, and at least part of adjacent fibers (6) is fused to each other; wherein the cutting out of the plurality of deposited body sheets as the drying progresses includes cutting out a first deposited body sheet (7a) including the fiber (6) extending in a first direction, and cutting out a second deposited body sheet (7b) including the fiber (6) extending in a second direction, the second direction crossing the first direction.

9. The method for manufacturing the fiber-oriented material (100) according to claim 8, wherein the stacking of the plurality of deposited body sheets (7a to 7c) includes stacking the first deposited body sheet (7a) and the second deposited body sheet (7b).

10. The method for manufacturing the fiber-oriented material (100) according to any one of claims 8 or 9, wherein

the fiber (6) includes 10 wt% or more of a bio-affinity material; and
the volatile liquid includes alcohol.

**Patentansprüche**

1. Faserorientiertes Material (100), umfassend eine Vielzahl von Fasern (6):

wobei die Fasern (6), die in dem faserorientierten Material (100) eingeschlossen sind, in einem nahe anhaftenden Zustand sind,
wobei eine Zugfestigkeit des faserorientierten Materials (100) Maxima in zwei oder mehr Zugrichtungen bei Winkeln in einem Bereich von nicht weniger als 0°, aber weniger als 180° aufweist, wobei die Winkel zwischen einer Linie und den Zugrichtungen liegen, wobei die Linie durch eine Mitte des faserorientierten Materials (100) verläuft; wobei das faserorientierte Material hergestellt wird durch:

Bilden eines abgelagerten Körpers (7) durch Bilden der Faser (6) unter Verwendung von Elektrospinnen und durch Ablagern der Faser (6); wobei das Bilden des abgelagerten Körpers einschließt (7), eine Ausdehnungsrichtung der Faser (6) in dem abgelagerten Körper (7) durch Ziehen der Faser in einer Richtung auszurichten;
Herausschneiden einer Vielzahl von Folien des abgelagerten Körpers (7a bis 7c) aus dem abgelagerten Körper (7);
Stapeln der Vielzahl von Folien des abgelagerten Körpers (7a bis 7c);

Zuführen einer Flüssigkeit zu der gestapelten Vielzahl von Folien des abgelagerten Körpers (7a bis 7c), wobei die Flüssigkeit flüchtig ist; und

Trocknen der gestapelten Vielzahl von Folien des abgelagerten Körpers (7a bis 7c), die die flüchtige Flüssigkeit einschließt, wobei bei fortschreitender Trocknung der Abstand zwischen den Fasern (6) durch eine Kapillarkraft reduziert wird, die in der flüchtigen Flüssigkeit zwischen Fasern wirkt, der Zustand der Fasern (6) ein nahe anhaftender Zustand wird und mindestens ein Teil von aneinander angrenzenden Fasern (6) miteinander verschmelzen; wobei das Herausschneiden der Vielzahl von Folien des abgelagerten Körpers bei fortschreitender Trocknung einschließt, eine erste Folie des abgelagerten Körpers (7a), die die Faser (6) einschließt, die sich in einer ersten Richtung erstreckt, und eine zweite Folie des abgelagerten Körpers (7b), die die Faser (6) einschließt, die sich in einer zweiten Richtung erstreckt, herauszuschneiden, wobei die zweite Richtung die erste Richtung kreuzt, wobei die Faser, die sich in einer ersten Richtung erstreckt, und die Faser (6), die sich in einer zweiten Richtung der gestapelten Körperfolien erstreckt, in einem Winkel von weniger als 180° zueinander ausgerichtet sind.

2. Faserorientiertes Material (100) nach Anspruch 1, wobei die Zugfestigkeit 30 MPa oder mehr in den Zugrichtungen, in denen die Zugfestigkeit die Maxima aufweist, beträgt.

3. Faserorientiertes Material (100) nach Anspruch 1, das faserorientierte Material (100) eine erste Region und eine zweite Region umfassend:

   wobei die erste Region und die zweite Region gestapelt sind, die erste Region, in der eine Vielzahl von ersten Fasern (6) in einer ersten Richtung orientiert ist, wobei die ersten Fasern (6), die in der ersten Region eingeschlossen sind, in einem nahe anhaftenden Zustand sind, die zweite Region, in der eine Vielzahl von zweiten Fasern (6) in einer zweiten Richtung orientiert ist, wobei die zweiten Fasern (6), die in der zweiten Region eingeschlossen sind, in einem nahe anhaftenden Zustand sind, wobei die zweite Richtung die erste Richtung kreuzt.

4. Faserorientiertes Material 100 nach Anspruch 3, wobei eine Zugfestigkeit in der ersten Richtung und die Zugfestigkeit in der zweiten Richtung 30 MPa oder mehr betragen.

5. Faserorientiertes Material 100 nach einem der Ansprüche 1 bis 4, wobei die Faser 10 Gew.-% oder mehr eines bioaffinen Materials einschließt.

6. Faserorientiertes Material (100) nach einem der Ansprüche 1 bis 5, wobei

   die Faser (6) eine Amidgruppe einschließt und
   ein Orientierungsgradparameter, ausgedrückt durch die nachstehende Formel, 1,05 oder mehr beträgt, wenn eine Oberfläche des faserorientierten Materials unter Verwendung eines polarisierten FT-IR-ATR-Verfahrens analysiert wird:

   der Orientierungsgradparameter $R1/R2$ ist;
   $R1$ ein maximales Absorptionsverhältnis ist, erlangt beim Messen durch Modifizieren eines Winkels zwischen einer Polarisierungsrichtung und dem faserorientierten Material (100);
   $R2$ ein minimales Absorptionsverhältnis ist, erlangt beim Messen durch Modifizieren des Winkels zwischen der Polarisierungsrichtung und dem faserorientierten Material (100); und
   das Absorptionsverhältnis $T1/T2$ ist, worin $T1$ eine Absorptionsintensität für eine Wellenzahl von 1640 cm$^{-1}$ ist und $T2$ eine Absorptionsintensität für eine Wellenzahl von 1540 cm$^{-1}$ ist.

7. Faserorientiertes Material (100) nach einem der Ansprüche 3 bis 5, wobei die erste Faser und die zweite Faser das gleiche Material einschließen.

8. Verfahren zum Herstellen eines faserorientierten Materials (100), umfassend:

   Bilden eines abgelagerten Körpers (7) durch Bilden einer Faser (6) unter Verwendung von Elektrospinnen und durch Ablagern der Faser (6); wobei das Bilden des abgelagerten Körpers einschließt (7), eine Ausdehnungsrichtung der Faser (6) in dem abgelagerten Körper (7) durch Ziehen der Faser in einer Richtung auszurichten;
   Herausschneiden einer Vielzahl von Folien des abgelagerten Körpers (7a bis 7c) aus dem abgelagerten Körper (7);
   Stapeln der Vielzahl von Folien des abgelagerten Körpers (7a bis 7c);
   Zuführen einer Flüssigkeit zu der gestapelten Vielzahl von Folien des abgelagerten Körpers (7a bis 7c), wobei die Flüssigkeit flüchtig ist; und

Trocknen der gestapelten Vielzahl von Folien des abgelagerten Körpers (7a bis 7c), die die flüchtige Flüssigkeit einschließt, wobei bei fortschreitender Trocknung der Abstand zwischen den Fasern (6) durch eine Kapillarkraft reduziert wird, die in der flüchtigen Flüssigkeit zwischen Fasern wirkt, der Zustand der Fasern (6) ein nahe anhaftender Zustand wird und mindestens ein Teil von aneinander angrenzenden Fasern (6) miteinander verschmelzen; wobei das Herausschneiden der Vielzahl von Folien des abgelagerten Körpers bei fortschreitender Trocknung einschließt, eine erste Folie des abgelagerten Körpers (7a), die die Faser (6) einschließt, die sich in einer ersten Richtung erstreckt, und eine zweite Folie des abgelagerten Körpers (7b), die die Faser (6) einschließt, die sich in einer zweiten Richtung erstreckt, herauszuschneiden, wobei die zweite Richtung die erste Richtung kreuzt.

9. Verfahren zum Herstellen des faserorientierten Materials (100) nach Anspruch 8, wobei das Stapeln der Vielzahl von Folien des abgelagerten Körpers (7a bis 7c) einschließt, die erste Folie des abgelagerten Körpers (7a) und die zweite Folie des abgelagerten Körpers (7b) zu stapeln.

10. Verfahren zum Herstellen des faserorientierten Materials (100) nach einem der Ansprüche 8 oder 9, wobei

die Faser (6) 10 Gew.-% oder mehr eines bioaffinen Materials einschließt; und
die flüchtige Flüssigkeit Alkohol einschließt.

## Revendications

1. Matériau à fibres orientées (100) comprenant une pluralité de fibres (6) :

les fibres (6) qui sont incluses dans le matériau à fibres orientées (100) étant dans un état d'adhérence étroite ; une résistance à la traction du matériau à fibres orientées (100) présentant des maximums dans deux directions de traction ou plus selon des angles dans une plage qui est non inférieure à 0° mais inférieure à 180°, les angles étant entre une ligne et les directions de traction, la ligne passant par un centre du matériau à fibres orientées (100) ; dans lequel le matériau à fibres orientées est produit au moyen de :

la formation d'un corps déposé (7) en formant la fibre (6) en utilisant l'électrofilage et en déposant la fibre (6) ; dans lequel la formation du corps déposé (7) inclut l'alignement d'une direction d'extension de la fibre (6) dans le corps déposé (7) en tirant la fibre dans une direction ;
la découpe d'une pluralité de feuilles de corps déposé (7a à 7c) à partir du corps déposé (7) ;
l'empilement de la pluralité de feuilles de corps déposé (7a à 7c) ;
la fourniture d'un liquide à la pluralité empilée de feuilles de corps déposé (7a à 7c), le liquide étant volatile ; et
le séchage de la pluralité empilée de feuilles de corps déposé (7a à 7c) incluant le liquide volatile, la distance entre les fibres (6) étant réduite, au fur et à mesure de la progression du séchage, par l'action d'une force de capillarité dans le liquide volatile entre des fibres, l'état des fibres (6) devient un état d'adhérence étroite et au moins une partie de fibres adjacentes (6) fusionnent les unes aux autres ; dans lequel la découpe de la pluralité de feuilles de corps déposé au fur et à mesure de la progression du séchage inclut la découpe d'une première feuille de corps déposé (7a) qui inclut la fibre (6) qui s'étend dans une première direction et la découpe d'une deuxième feuille de corps déposé (7b) qui inclut la fibre (6) qui s'étend dans une deuxième direction, la deuxième direction croisant la première direction, dans lequel la fibre qui s'étend dans une première direction et la fibre (6) qui s'étend dans une deuxième direction des feuilles de corps empilées sont orientées l'une par rapport à l'autre selon un angle qui est inférieur à 180°.

2. Matériau à fibres orientées (100) selon la revendication 1, dans lequel la résistance à la traction est de 30 MPa ou plus dans les directions de traction dans lesquelles la résistance à la traction présente les maximums.

3. Matériau à fibres orientées (100) selon la revendication 1, le matériau à fibres orientées (100) comprenant une première région et une deuxième région ;
la première région et la deuxième région étant empilées, la première région dans laquelle une pluralité de premières fibres (6) sont orientées dans une première direction, les premières fibres (6) qui sont incluses dans la première région étant dans un état d'adhérence étroite, la deuxième région dans laquelle une pluralité de deuxièmes fibres (6) sont orientées dans une deuxième direction, les deuxièmes fibres (6) qui sont incluses dans la deuxième région étant dans un état d'adhérence étroite, la deuxième direction croisant la première direction.

**4.** Matériau à fibres orientées (100) selon la revendication 3, dans lequel une résistance à la traction dans la première direction et la résistance à la traction dans la deuxième direction sont de 30 MPa ou plus.

**5.** Matériau à fibres orientées (100) selon l'une quelconque des revendications 1 à 4, dans lequel la fibre inclut 10 % en poids ou plus d'un matériau à bio-affinité.

**6.** Matériau à fibres orientées (100) selon l'une quelconque des revendications 1 à 5, dans lequel :

la fibre (6) inclut un groupe amide ; et
un paramètre de degré d'orientation qui est exprimé par la formule qui suit est de 1,05 ou plus lorsqu'une surface du matériau à fibres orientées est analysée en utilisant un procédé FT-IR-ATR polarisé :

le paramètre de degré d'orientation est $R1/R2$ ;
$R1$ est un taux d'absorbance maximum qui est obtenu lors d'une mesure en modifiant un angle entre une direction de polarisation et le matériau à fibres orientées (100) ;
$R2$ est un taux d'absorbance minimum qui est obtenu lors d'une mesure en modifiant l'angle entre la direction de polarisation et le matériau à fibres orientées (100) ; et
le taux d'absorbance est $T1/T2$, où $T1$ est une intensité d'absorption pour un nombre d'onde de 1640 cm$^{-1}$ et $T2$ est une intensité d'absorption pour un nombre d'onde de 1540 cm$^{-1}$.

**7.** Matériau à fibres orientées (100) selon l'une quelconque des revendications 3 à 5, dans lequel la première fibre et la deuxième fibre incluent le même matériau.

**8.** Procédé pour fabriquer un matériau à fibres orientées (100), comprenant :

la formation d'un corps déposé (7) en formant une fibre (6) en utilisant l'électrofilage et en déposant la fibre (6) ; dans lequel la formation du corps déposé (7) inclut l'alignement d'une direction d'extension de la fibre (6) dans le corps déposé (7) en tirant la fibre dans une direction ;
la découpe d'une pluralité de feuilles de corps déposé (7a à 7c) à partir du corps déposé (7) ;
l'empilement de la pluralité de feuilles de corps déposé (7a à 7c) ;
la fourniture d'un liquide à la pluralité empilée de feuilles de corps déposé (7a à 7c), le liquide étant volatile ; et
le séchage de la pluralité empilée de feuilles de corps déposé (7a à 7c) incluant le liquide volatile, la distance entre les fibres (6) étant réduite, au fur et à mesure de la progression du séchage, par l'action d'une force de capillarité dans le liquide volatile entre des fibres, l'état des fibres (6) devient un état d'adhérence étroite et au moins une partie de fibres adjacentes (6) fusionnent les unes aux autres ; dans lequel la découpe de la pluralité de feuilles de corps déposé au fur et à mesure de la progression du séchage inclut la découpe d'une première feuille de corps déposé (7a) qui inclut la fibre (6) qui s'étend dans une première direction et la découpe d'une deuxième feuille de corps déposé (7b) qui inclut la fibre (6) qui s'étend dans une deuxième direction, la deuxième direction croisant la première direction.

**9.** Procédé pour fabriquer le matériau à fibres orientées (100) selon la revendication 8, dans lequel l'empilement de la pluralité de feuilles de corps déposé (7a à 7c) inclut l'empilement de la première feuille de corps déposé (7a) et de la deuxième feuille de corps déposé (7b).

**10.** Procédé pour fabriquer le matériau à fibres orientées (100) selon l'une quelconque des revendications 8 ou 9, dans lequel :

la fibre (6) inclut 10 % en poids ou plus d'un matériau à bio-affinité ; et
le liquide volatile inclut de l'alcool.

FIG. 1A

FIG. 1B

FIG. 2A

FIG. 2B

FIG. 2C

FIG. 3

FIG. 4A

FIG. 4B

FIG. 5

FIG. 6

201

6

7a

7b

7a

7b

FIG. 7A

6

FIG. 7B

100

7a,7b

Z
X
Y

FIG. 8A

100

7a,7b

Z
X
Y

FIG. 8B

6

Z
X
Y

FIG. 8C

FIG. 9

FIG. 10A

FIG. 10B

FIG. 11A

FIG. 11B

FIG. 12

FIG. 13A

FIG. 13B

FIG. 13C

FIG. 13D

DIRECTION IN WHICH FIBER 6 EXTENDS

C   D   E   7,70,100

FIG. 14

FIG. 15A          FIG. 15B

FIG. 16A

FIG. 16B

FIG. 17

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013139655 A, Kokai

- WO 2013000442 A